# EUROPEAN PATENT APPLICATION

(11) **EP 2 889 764 A1**
(43) Date of publication of application: **01.07.2015**
(21) Application number: 14200161.9
(22) Date of filing: 23.12.2014
(51) Int. Cl.: G06F 9/44, G06F 3/0482

(54) **An image forming apparatus using a GUI component to display and operate an application screen, and a non-transitory computer readable recording medium**

(30) Priority: 26.12.2013 JP 2013268741
(71) Applicant: Kyocera Document Solutions Inc., Osaka-shi, Osaka 540-8585 (JP)
(72) Inventor: Sasaki, Hideyuki, Osaka, 540-8585 (JP)
(74) Representative: Trinks, Ole

(57) **Abstract**

An image forming apparatus (100) of the present invention includes an application storing unit (120A), a GUI component storing unit (120B), and an operation panel (140). The application storing unit (120A) is configured to store a program and data for an application of various kinds of process performed on the image forming apparatus (100). The GUI component storing unit (120B) includes a GUI component (500) of a list displayed on an application screen, an item displaying processing function (500A) for displaying an item of the list, a selection status changing processing function (500B) for changing a selection status of the list, and item data. The operation panel (140) is configured to display a screen of the application.

## Description

### FIELD

Unless otherwise indicated herein, the description in this field section or the background section is not prior art to the claims in this application and is not admitted to be prior art by inclusion in this section. The present invention relates to an image forming apparatus in which a GUI component is used to display and operate an application screen via an operation panel, and a non-transitory computer readable recording medium.

### BACKGROUND

A typical image forming apparatus such as a printer or a multifunction peripheral includes a graphical user interface (GUI). The GUI includes components of software that perform process such as operation buttons, selection items (hereinafter referred to as "list"), or text input fields that are provided to an application screen. An application developer of the image forming apparatus can easily generate the application screen with satisfactory quality by using the components (GUI components) included in the GUI. Further, the application screen that allows variable display can be generated by providing information generated by a user to the GUI component. For example, on a known image forming apparatus, when a limitation is imposed on a functionality to be used depending on the user, functionality information for determining whether or not to allow use of the functionality is associated with the GUI component, and the functionality is displayed when it is determined that the use of the functionality is allowed in view of the functionality information associated with the GUI component, and otherwise inhibited from being displayed.

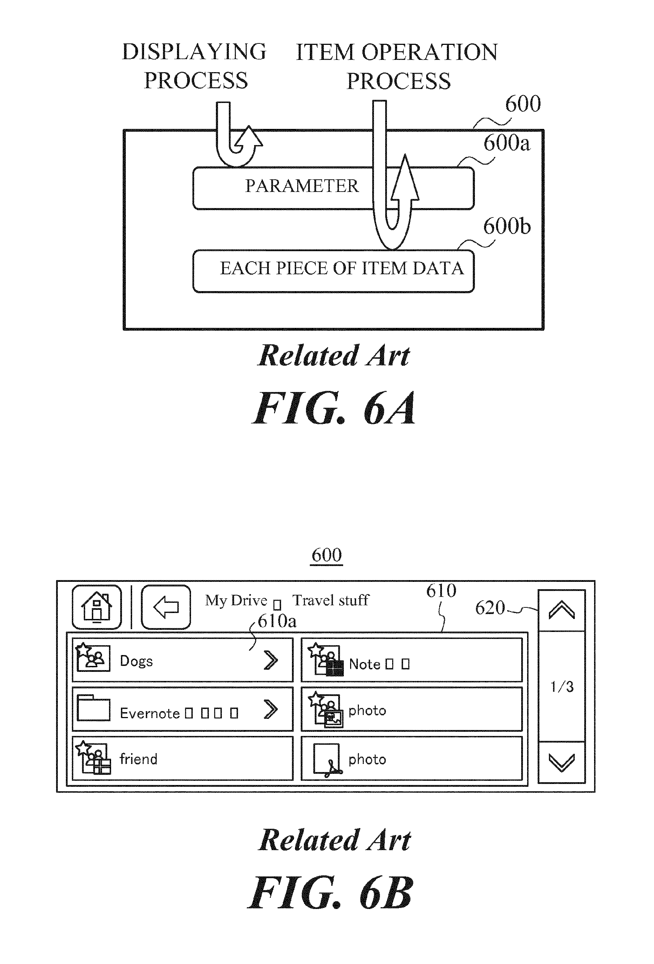

In regard to the GUI component, various requests to, for example, unify colors of the list on the application screen are made by a developer, which raises demands for the GUI component provided with a mechanism capable of realizing those requests. Therefore, in displaying process on an application side illustrated in FIG. 6A, customization that meets the developer's request is realized by changing data on a parameter 600a to be passed to the GUI component without changing the GUI component itself. A method of displaying a list control 600 according to the related art when a large number of items are provided on the application screen is described with reference to FIG. 6B. The list control 600 displays a list 610 provided with a plurality of divided items 610a. Further, when not all the items 610a can be displayed on the list 610, a scroll bar 620 is displayed.

An example of coding an item list of the list control 600 to set a size and a position of the item 610a illustrated in FIG. 6B is shown below. In such an item list ("itemList.setItemIconSize"), a width ("width") of one item, a height ("height") thereof, a position thereof relative to a left edge of a screen ("[left]"), and a position thereof relative to a top edge of a screen ("[top]") can be set for the one item by parameters.
itemList.setItemIconSize(width, height, [left], [top]);

An example of coding item data on the list control 600 to display each of the items 610a illustrated in FIG. 6B is shown below. In such item data ("itemData"), the item data on one line corresponds to one item 610a, and the item display is set by "text", while whether or not the icon of the item 610a is selected is set in "selected" and "false".

```
 var itemData = [
 {"text": "Dogs", "selected":"false", "icon":"/img/folder.png"},
 {"text":"Note List", "selected":"false", "icon":"/img/shared.png"},
 ];
 item List. show(item Data);
```

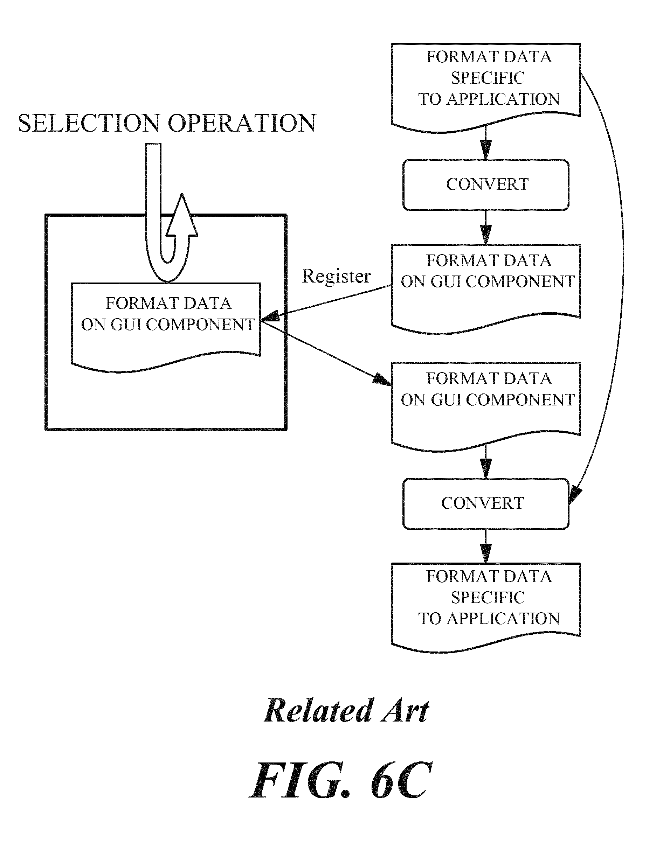

Further, item operation process on the application side illustrated in FIG. 6A directly accesses each piece of item data 600b registered in the list control 600 serving as the GUI component. In addition, there is application data on each piece of item data 600b accessed by a selection operation of the item operation process. In such a case, the item operation process cannot process both formats of each piece of item data 600b serving as format data defined by the GUI component and the application data serving as format data specific to an application. Therefore, as illustrated in FIG. 6C, the application data accessed by the selection operation is converted from the format data specific to the application into the format data on the GUI component. Further, when the application data needs to be changed, the application data is changed by being converted from the format data on the GUI component into the format data specific to the application.

However, for example, when only two item lists ("itemList.setItemIconSize") of the list control 600 serving as the GUI component are provided, the upper limit of the number of pieces of item data is up to a maximum of two. Further, the list control 600 has a complicated structure, and hence there is a case where the developer's request cannot be met only by changing data on the parameter 600a and passing the data to the list control. In such a case, the GUI component cannot be used unless the GUI component itself is changed, and hence it is difficult to reuse the GUI component as a software resource. Further, the application data accessed by the selection operation needs to be converted from the format data specific to the application into the format data of the GUI component, which requires time and labor.

### SUMMARY

The present invention relates to an image forming apparatus in which a GUI component is used to display and operate an application screen via an operation panel, and a non-transitory computer readable recording medium.

An image forming apparatus of the present invention includes an application storing unit, a GUI component storing unit, and an operation panel. The application storing unit is configured to store a program and data for an application of various kinds of process performed on the image forming apparatus. The GUI component storing unit includes a GUI component of a list displayed on an application screen, an item displaying processing function for displaying an item of the list, a selection status changing processing function for changing a selection status of the list, and item data. The operation panel is configured to display a screen of the application.

Additional features and advantages are described herein, and will be apparent from the following Detailed Description and the figures.

### BRIEF DESCRIPTION OF FIGURES

All drawings are intended to illustrate some aspects and examples of the present invention. The drawings described are only schematic and are non-limiting, and are not necessarily drawn to scale.
FIG. 1 is a schematic diagram illustrating a functional block configuration of an image forming apparatus according to an embodiment of the present invention.
FIG. 2 is a schematic diagram illustrating an execution procedure of a list control on the image forming apparatus.
FIG. 3 is a schematic diagram illustrating the list control.
FIGS. 4A and 4B are schematic diagrams illustrating display examples of the list control.
FIG. 5 is a schematic diagram illustrating a selection operation of item operation process according to the embodiment of the present invention.
FIGS. 6A to 6C are schematic diagrams illustrating a typical list control according to the related art.

### DETAILED DESCRIPTION

Various embodiments are described below with reference to the figures. It should be understood, however, that numerous variations from the depicted arrangements and functions are possible while remaining in the scope and spirit of the claims. For instance, one or more elements may be added, removed, combined, distributed, substituted, re-positioned, re-ordered, and/or otherwise changed. Further, where this description refers to one or more functions being implemented on and/or by one or more devices, one or more machines, and/or one or more networks, it should be understood that one or more of such entities could carry out one or more of such functions by themselves or in cooperation, and may do so by application of any suitable combination of hardware, firmware, and/or software. For instance, one or more processors may execute one or more sets of programming instructions as at least unit of carrying out one or more of the functions described herein.

Now, an embodiment of the present invention is described with reference to the accompanying drawings. In the present invention, a GUI component of a list control high in general versatility and customizability is used to list-display and operate an application screen on an operation panel of an image forming apparatus.

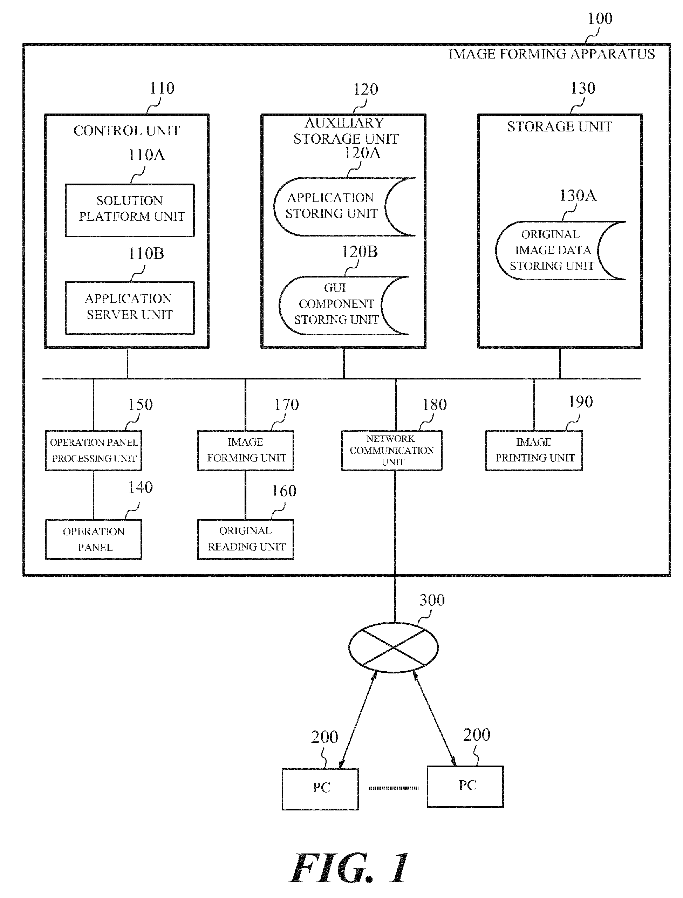

A functional configuration of an image forming apparatus 100 according to the embodiment is described with reference to FIG. 1. The image forming apparatus 100 illustrated in FIG. 1 includes a control unit 110, an auxiliary storage unit 120, a storage unit 130, an operation panel 140, an operation panel processing unit 150, an original reading unit 160, an image forming unit 170, a network communication unit 180, and an image printing unit 190. Those respective components are configured to be connected to one another via a bus or the like. The control unit 110 includes a solution platform unit 110a and an application server unit 110b. The auxiliary storage unit 120 includes an application storing unit 120a and a GUI component storing unit 120b.

The control unit 110 includes main storage means such as a RAM or a ROM and control means such as a micro processing unit (MPU) or a central processing unit (CPU). Further, the control unit 110 includes controller functionalities relating to interfaces such as various kinds of I/Os, a universal serial bus (USB), a bus, and other such hardware, and controls the overall image forming apparatus 100.

The solution platform unit 110a is a platform that combines standard technologies such as JavaScript® and a web service, and supports development of an application to be mounted to the image forming apparatus 100.

The application server unit 110b supports execution of the application mounted to the image forming apparatus 100.

The auxiliary storage unit 120 is an auxiliary storage device formed of a flash memory or the like, and stores a program and data for process executed by the control unit 110.

The application storing unit 120a stores a program and data for an application for displaying process, item operation process, and the like performed on the image forming apparatus 100.

The GUI component storing unit 120b stores the GUI component of the image forming apparatus 100 and an item displaying processing function 500a, a selection status changing processing function 500b, and each piece of item data 500c that are registered in the GUI component. The item displaying processing function 500a, the selection status changing processing function 500b, and the each piece of item data 500c are described later in detail.

The storage unit 130 is a storage device formed of a hard disk drive, and stores the program and data for the process executed by the control unit 110.

An original image data storing unit 130a included in the storage unit 130 temporarily stores original image data read from the original reading unit 160, original image data received by the network communication unit 180, and the like.

The operation panel 140 is caused to display the application screen by the operation panel processing unit 150, and outputs operation data obtained when a user performs an operation via the displayed application screen to the operation panel processing unit 150.

The operation panel processing unit 150 performs process for displaying the application screen on the operation panel 140 in response to a display request received from the user, process for displaying an operation item selected by the user on the operation panel 140, and process for inputting the user's operation via the operation panel 140. Further, the operation panel processing unit 150 includes a browser that can execute the GUI component.

The original reading unit 160 is configured to read an original set on an original table of the image forming apparatus 100, and is allowed to read the original set on the original table when the user performs a read request via the operation panel 140.

The image forming unit 170 converts the original image data read by the original reading unit 160 into image data on a printable image or an image that can be transmitted by FAX or E-mail.

The network communication unit 180 includes a detachably attachable LAN interface for connection to a network 300. Further, the image forming apparatus 100 can perform communications to/from a device such as a PC 200 connected to the network 300 by the network communication unit 180.

The image printing unit 190 includes a functionality of printing, on paper, the image data whose print request has been received from the user.

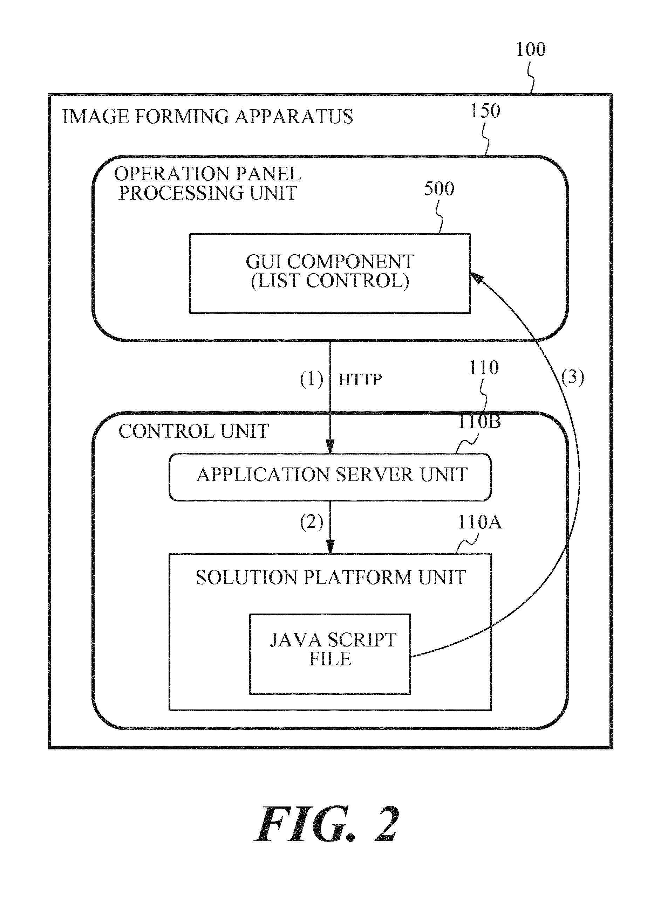

Next, an execution procedure of a list control 500 serving as the GUI component according to the embodiment of the present invention is described with reference to FIG. 2. The user selects at least one list from among lists displayed on the application screen of the operation panel 140 illustrated in FIG. 1. Subsequently, as indicated in (1), the application server unit 110b of the control unit 110 is notified of a list display or a list operation from the operation panel processing unit 150 via a network protocol of a hypertext transfer protocol (HTTP). Subsequently, as indicated in (2), when the notification is input, the application server unit 110b extracts the list control 500 implemented in a JavaScript® file of the solution platform unit 110a. Subsequently, as indicated in (3), the application server unit 110b downloads the list control 500 serving as the GUI component onto the operation panel processing unit 150. When downloaded onto the operation panel processing unit 150, the list control 500 is executed by the browser provided to the operation panel processing unit 150.

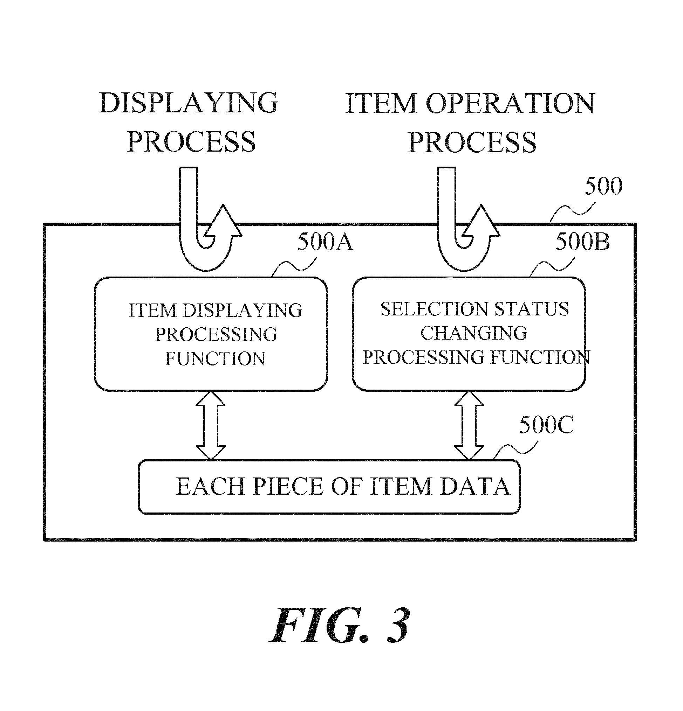

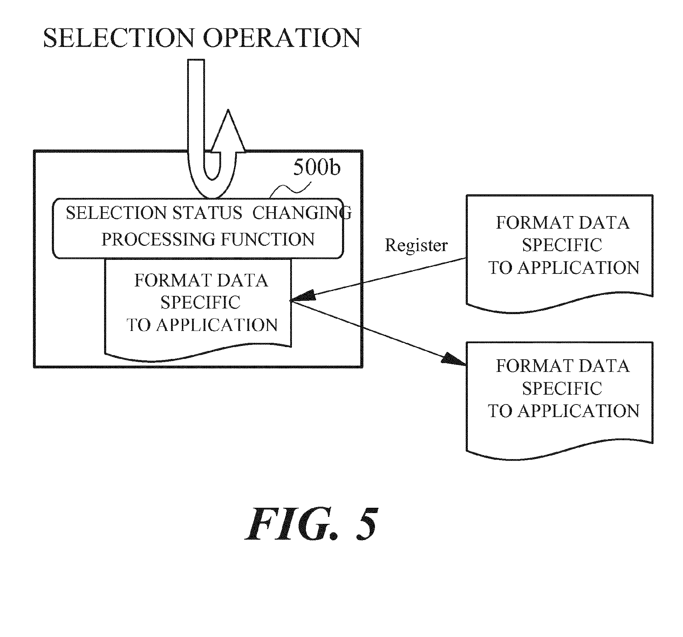

Next, the displaying process and the item operation process according to the embodiment of the present invention are described with reference to FIG. 3. The displaying process illustrated in FIG. 3 uses a function provided as the GUI component to access the each piece of item data 500c by the item displaying processing function 500a generated by a developer. Instead of setting a parameter to be passed to the GUI component, the displaying process registers the item displaying processing function 500a generated by the developer in the list control 500 serving as the GUI component. Accordingly, the displaying process can display an arbitrary icon image in the item by the item displaying processing function 500a. Further, instead of directly accessing the each piece of item data 500c, the item operation process illustrated in FIG. 3 accesses the each piece of item data 500c by the selection status changing processing function 500b serving as a function generated by the developer. Accordingly, application data accessed by a selection operation of the item operation process can be set as arbitrary format data specific to the application instead of being converted into format data on the GUI component as illustrated in FIG. 5.

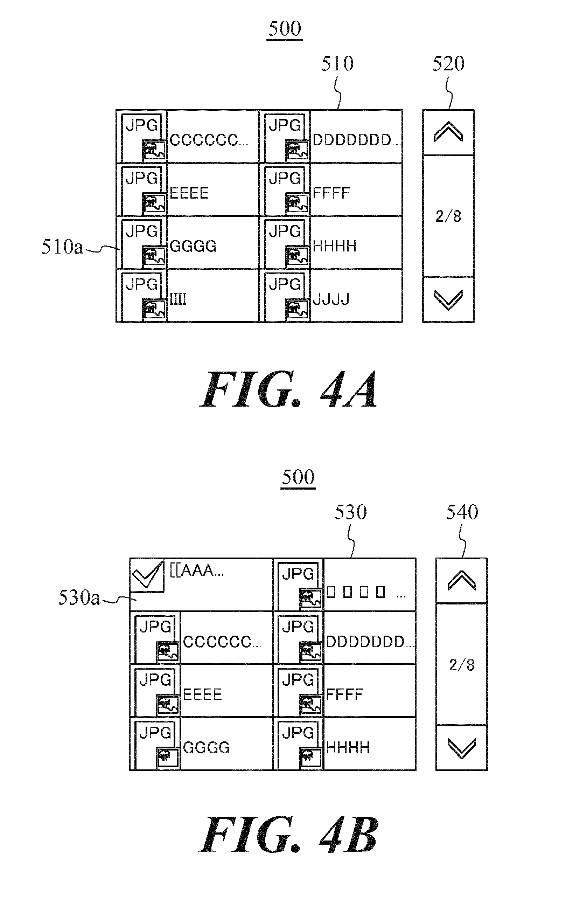

Next, the displaying process for the list control 500 according to the embodiment of the present invention is described with reference to FIGS. 4A and 4B. The list control 500 displays a list 510 including a plurality of items 510a. Further, when the list 510 cannot display all the items 510a, a scroll bar 520 is displayed.

An example of coding the item displaying processing function 500a of the list control 500 serving as a function used to set a size of the item 510a illustrated in FIG. 4A is shown below. In the above-mentioned function ("function"), an item list ("itemList") for one item, a position in the order of the item within the item list ("index"), item data ("itemData"), a width ("width") of the one item, a height ("height") thereof, a position thereof relative to a left edge of a screen ("[left]"), a position thereof relative to a top edge of the screen ("[top]"), and the like can be set in the form of a function. Further, in the description of a button ("button") of the function, free setting can be performed by assembling components such as adding a label, a color, and a shadow to a toggle button.

```
 var onShow = function(itemList, index, itemData, savedData,
 left, top, width, height, row, col) {
 var labeltext = new HyPAS.Gui.MultiStateLabel(null, itemData);
 var button = new HyPAS.Gui.ToggleButton(null, "button" + index);
 button.addLabel(labelText, 45, 0);
 button.checked(savedData); // The selection status is set (savedData is "true" or
 "false")
 return button;
 };
 item List.setOnShowFu nc(onShow);
```

Further, an example of coding the item data on the list control 500 in a case of displaying the item when a simple text illustrated in FIG. 4A is designated is shown below. In such item data ("itemData"), the item can be directly set instead of being designated by "text", and hence it is easy to set the item data.

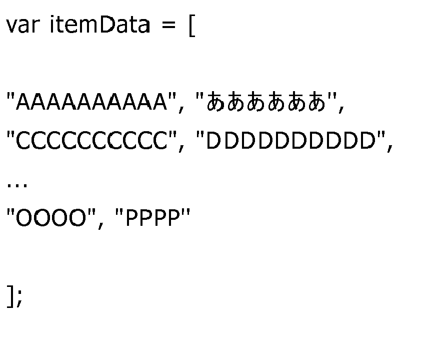

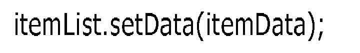

Further, the item displaying processing function 500a can display a different item 530a as illustrated in FIG. 4B. In other words, with the list control 600 according to the related art, a change can be made only within a range that allows parameter data to be set, and hence it is necessary to change the list control 500 serving as the GUI component itself in order to display the item 530a within a list 530 as illustrated in FIG. 4B. However, by using the item displaying processing function 500a, it is possible to display the list 530, into which the item 530a having a design different from another item as in the list 530 illustrated in FIG. 4B is mixed, without changing the GUI component.

Next, the item operation process for the list control 500 according to the embodiment of the present invention is described with reference to FIG. 3. The item operation process illustrated in FIG. 3 uses a function provided as the GUI component to access the each piece of item data 500c by the selection status changing processing function 500b generated by the developer.

An example of coding the selection status changing processing function 500b illustrated in FIG. 3 is shown below. A selection status of the item is detected based on a return value of "onSelect" (selected status) method and "onUnselect" (unselected status) method in the above-mentioned function ("function").

```
 //When the selected items is clicked
 var onSelect = function(itemList, index, itemData, savedData, button) {
 return true;
 };
 item List.setOnshowFunc(onSelect);
 // When the unselected item is clicked
 var onUnselect = function(itemList, index, itemData, savedData, button) {
 return false;
 };
 itemList.setOnShowFunc(onUnselect);
```

With the list control 500 described above, the developer generates the selection status changing processing function 500b. Accordingly, the application data on the each piece of item data 500c accessed by the selection operation of the item operation process can be set as the arbitrary format data specific to the application instead of being converted into the format data on the GUI component as illustrated in FIG. 5.

By providing a mechanism of registering the item displaying processing function 500a serving as the function generated by the developer in the list control 500 serving as the GUI component instead of setting the parameter as the information such as the size and the position of the item 510a, it is possible to freely designate a size of the icon set for the item 510a, the number of the icons, and the like. Therefore, the item 510a can be changed with a high degree of freedom. Further, the displaying process of the list control 500 can enhance the customizability in design or the like of the item 510a by the item displaying processing function 500a serving as a simple application interface. Further, instead of directly accessing the each piece of item data 500c, the item operation process accesses the each piece of item data 500c from the selection status changing processing function 500b, which is a function generated by the developer, which eliminates the need to convert the accessed application data from the format data specific to the application into the format data on the GUI component. Accordingly, the developer can generate the application data without any concern for consistency between the format data specific to the application and the format data on the GUI component. Therefore, it is possible to enhance the general versatility in the case of using the list control 500, to thereby be able to increase work efficiency of the developer.

Note that, in the embodiment, the GUI component of the application screen to be displayed on the operation panel 140 of the image forming apparatus 100 is set as the list control 500, but the present invention is not limited thereto, and various GUI components can be configured in the same manner. Further, the same GUI component can be employed not only for the application screen displayed on the operation panel 140 of the image forming apparatus 100 but also for a screen of another general web application or a Windows® application.

The image forming apparatus according to the present invention as described above provides the list control of the GUI component which is simple, easy to use, and high in the general versatility that allows use for a large number of purposes and the customizability that allows changes to more designs and functionalities.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. An image forming apparatus (100) comprising:
- an application storing unit (120A) for storing a program and data for an application of various kinds of process performed on the image forming apparatus (100);
- a GUI component storing unit (120B) including:
- a GUI component (500) of a list displayed on an application screen, said GUI component (500) being a component of software included in a graphical user interface (GUI) of the image forming apparatus (100),
- an item displaying processing function (500A) for displaying an item of the list,
- a selection status changing processing function (500B) for changing a selection status of the list, and item data; and
- an operation panel (140) for displaying a screen of the application.

2. The image forming apparatus (100) according to claim 1, wherein the item displaying processing function (500A) and the selection status changing processing function (500B) are registered in a list control as the GUI component (500).

3. The image forming apparatus (100) according to claim 1 or 2, wherein the item displaying processing function (500A) is configured for setting at least one of a list for one item, a position in an order of the one item within the list, item data, a width of the one item, a height of the one item, a position thereof relative to a left edge of the application screen, and a position thereof relative to a top edge of the application screen.

4. The image forming apparatus (100) according to one of the claims 1 to 3, wherein the item displaying processing function (500A) is configured for displaying a list, into which an item having a design different from another item is mixed, without changing the GUI component (500).

5. The image forming apparatus (100) according to one of the claims 1 to 4, wherein the selection status changing processing function (500B) is configured for setting application data on the item data accessed by a selection operation for the item to have arbitrary format data specified to the application instead of format data on the GUI component (500).

6. A non-transitory computer readable recording medium causing a computer of an image forming apparatus (100) to function as:
- an application storing unit (120A) for storing a program and data for an application of various kinds of process performed on the image forming apparatus (100);
- a GUI component storing unit (120B) including:
- a GUI component (500) of a list displayed on an application screen, said GUI component (500) being a component of software included in a graphical user interface (GUI) of the image forming apparatus (100),
- an item displaying processing function (500A) for displaying an item of the list,
- a selection status changing processing function (500B) for changing a selection status of the list, and item data; and
- an operation panel (140) for displaying a screen of the application.

7. The non-transitory computer readable recording medium according to claim 6, wherein the item displaying processing function (500A) and the selection status changing processing function (500B) are registered in a list control as the GUI component (500).

8. The non-transitory computer readable recording medium according to claim 6 or 7, wherein the item displaying processing function (500A) is configured for setting at least one of a list for one item, a position in an order of the one item within the list, item data, a width of the one item, a height of the one item, a position thereof relative to a left edge of the application screen, and a position thereof relative to a top edge of the application screen.

9. The non-transitory computer readable recording medium according to one of the claims 6 to 8, wherein the item displaying processing function (500A) is configured for displaying a list, into which an item having a design different from another item is mixed, without changing the GUI component (500).

10. The non-transitory computer readable recording medium according to one of the claims 6 to 9, wherein the selection status changing processing function (500B) is configured for setting application data on the item data accessed by a selection operation for the item to have arbitrary format data specified to the application instead of format data on the GUI component (500).
